# EUROPEAN PATENT SPECIFICATION

(11) **EP 1 193 667 B1**
(45) Date of publication and mention of the grant of the patent: **25.01.2006**
(21) Application number: 00907677.9
(22) Date of filing: 07.03.2000
(51) Int. Cl.: G09F 1/02, G09F 1/10, G06T 3/00

(54) **METHOD FOR CREATING VIRTUAL BILLBOARDS IN SPORTS FIELDS AND THE LIKE AND SUPPORT FOR THEIR REALIZATION**
VERFAHREN ZUR ERZEUGUNG VON VIRTUELLEN PLAKAT IM SPORTANLAGEN UND DERGLEICHEN UND DERGLEICHEN, UND TRÄGER DAFÜR.
PROCEDE PERMETTANT DE CREER DES PANNEAUX PUBLICITAIRES VIRTUELS DANS DES STADES SPORTIFS ET DES INSTALLATIONS SIMILAIRES ET SUPPORT PERMETTANT DE REALISER LESDITS PANNEAUX

(30) Priority: 15.04.1999 ES 9900780
(43) Date of publication of application: 03.04.2002
(73) Proprietor: Market SP 94, S.L., 08006 Barcelona (ES)
(72) Inventor: PALMEROLA MIR, Jesús, E-08006 Barcelona (ES)
(74) Representative: Durán Moya, Luis-Alfonso
(86) International application number: PCT/ES2000/000080
(87) International publication number: WO 2000/063868

(56) References cited:
- WO-A-93/04559
- WO-A-98/43231
- ES-A- 2 114 819
- US-A- 5 534 340

## Description

The present invention relates to a method for the creation of virtual panels in sports grounds and the like which provides substantial characteristics of novelty and inventive activity. It also refers to a support which allows the method to be carried out.

WO 9843231 discloses a method for the production of a printed advertising panel to be placed on a terrace near a playing field. The panel is intended to appear as facing a viewer from an oblique point of view. An angle displacement is applied to the point of the panel, the angle equaling the angle between a perpendicular view of the panel and an oblique view of the point of the panel relative to the perpendicular view.

The aim of the present invention is to provide a method by means of which it is possible to design advertising posters of varying content for their arrangement on flat surfaces, on the playing field or adjacent sites of a sports ground, for example, in the vicinity of the goals of a football pitch, having characteristics such that its display by means of a television camera situated at a fixed point permits the observation of the television image in which said advertising sign or poster, which is arranged, as indicated, on the same flat surface of the playing field, is seen in its correct proportions and position, that is to say, as it would be seen if the poster were standing on the edges of the playing field, creating an effect which is designated in this description as "virtual panel". The method of the present invention makes it possible to obtain advertising supports in the form of canvases or the like which, when arranged on the appropriate surface of the playing field, make it possible to obtain an advertising means which is not aggressive in relation to possible impacts of the players, since it does not contain hard parts in the actual support or in the fixing system, also making it possible to produce posters of large dimensions, for example, 10 metres by 10 metres, which can be easily transported and installed, simultaneously allowing rapid dismantling.

In order to fulfil its aims more satisfactorily, the method of the present invention will comprise the production of banners with high strength support grille, for example with threads of 1100 decitex, with PVC coating on two faces and printing with welded paint. Under these conditions, the grille permits the passage of air so that preferably consist of impermeable, high strength PVC tubes, each of which is hermetically welded, providing a neck of soft plastic which allows it to be filled with water or some other liquid. These tubular elements give weight to the banner and, more importantly, enable it to be perfectly coupled to the surface intended to receive it, preventing air currents from entering and causing the banner to flap.

According to a variant of the invention, the latter will permit the production of mixed advertising panels, that is to say, in part they will comprise the advertising image produced on the flat support and arranged on the flat surface of the playing field and in part will consist of a vertical panel of the fence surrounding the pitch, making it possible to effect the correct union of the two advertising images in order to achieve their display as a whole.

The method of the present invention comprises a first phase of creating a virtual field and obtaining templates on which the field will be depicted in three dimensions, starting from the real measurements thereof and the exact position of the television camera intended to capture the advertising images produced according to the method, since on the exact position of these will depend the precise form of the template which will be obtained. Account will also be taken of the lines which delimit the field and the terraces, which mark the limits between which the advertising panels can be located horizontally, with the graphic images suitably deformed so that they can be displayed as if they were standing.

The virtual height of the panel will then be determined starting from the measurements available, tracing a line which passes from the outer limit of the panel to the camera, seeking the intersection of this line with a vertical plane or Y-Z plane which will be arranged virtually on the inner limit of the panel. By cutting the line L previously traced by the plane X-Y, the virtual height of the panel is obtained. The desired shape, polygonal or of other type, can then be located, with the proportions of the original panel and the height calculated, on the inner limit.

The panel will be positioned in the most convenient place and the deformation template will be obtained by drawing the lines from the point at which the camera is located to the upper corners of the panel. These lines will be projected to the plane of the playing field, and the polygon formed by the lower corners of the panel and the ends of the projected lines will form the virtual panel. It should be considered, therefore, that the deformation template is the projection of the panel which it is desired to represent from the geometric point corresponding to the location of the display camera.

Once the shape and dimensions of the deformation template have been obtained, the original panel will be adapted to the template obtained in the second phase of the method of the present invention of adaptation of the original panel to the deformation template.

In this phase the shape of the original panel will basically be transformed into the shape obtained from the projection in three dimensions in the preceding phase.

For this, the original desired shape is converted into the deformation template by means of image processing software. The result obtained is inscribed at the original size with the measurements obtained in the preceding phase and is located on the playing field at the precise co-ordinates stipulated when projection is carried out. Any change of size or position may cause incorrect viewing of the virtual panel.

The present invention likewise provides for the creation of virtual panels by means of luminous projection, in which case the graphic image of a real panel will be projected, on a transparent background, on the sports field in order to be able to trace and inscribe the latter, obtaining the result that what is positioned on the ground has the same effect as the standing arrangement. Therefore, in a first phase the sign will be projected by means of a light gun which will be placed in the precise location where the television camera will be found, projecting onto the playing field the real projectable sign, produced on a transparent background, proceeding afterwards to the inscription of the virtual panel, constituting a pre-inscription which will later be traced for its final positioning on the playing field. In this process, the light gun will be directed towards the point at which it is desired to place the panel and will be sized and focused so that it occupies the desired space.

For greater understanding thereof, drawings illustrating the method of the present invention are appended by way of non-limiting example.

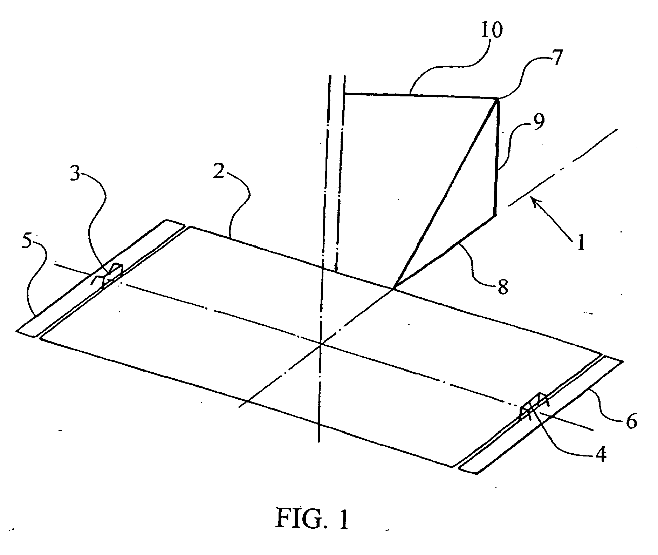

Figure 1 shows a perspective view of the relative position of the camera with respect to the playing field.

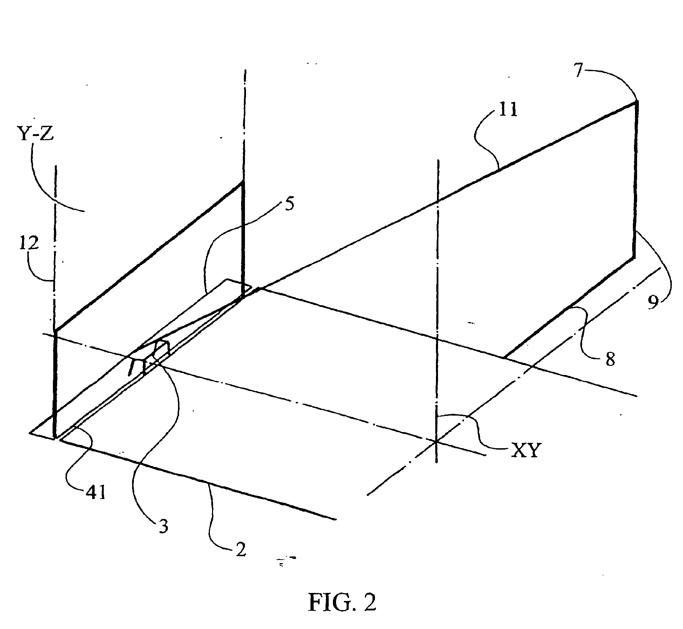

Figure 2 shows a perspective view which shows the trace of the reference line between the end of the conventional panel and the camera.

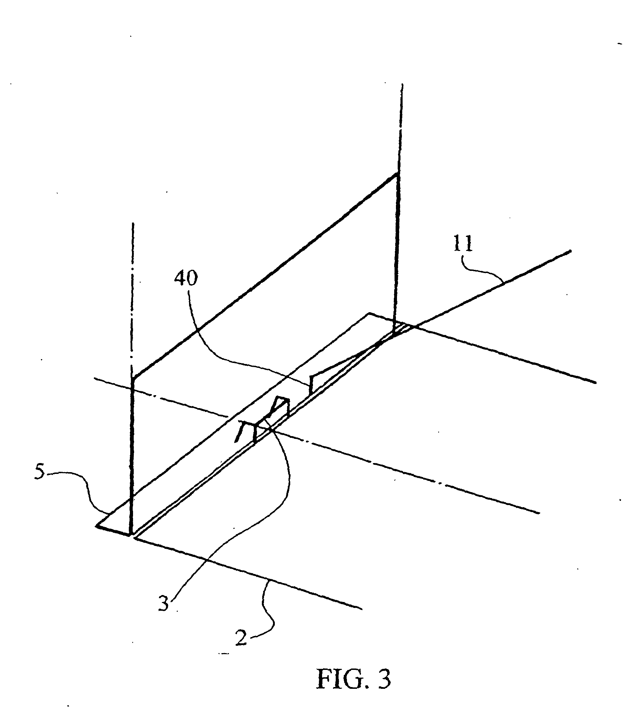

Figure 3 shows a detail of the perspective view showing the height of the virtual panel.
Figure 4 shows the positioning of the desired shape, in this case rectangular with the proportions of the original panel.
Figure 5 shows a perspective view with the lines from the camera to the upper corners of the panel.
Figure 6 shows a relative position of the deformation template and the real sign.
Figure 7 shows a perspective view of the location of the light gun with respect to the real sign.
Figure 8 shows a detail in perspective of the view in Figure 7.
Figures 9 and 10 show respective diagrammatic views corresponding to the pre-inscription and the final image of the sign.
Figure 11 shows a perspective view illustrating the connection of advertising images in the horizontal and vertical plane.
Figures 12 and 13 are respective plan and sectional views of an advertising support corresponding to the present invention.

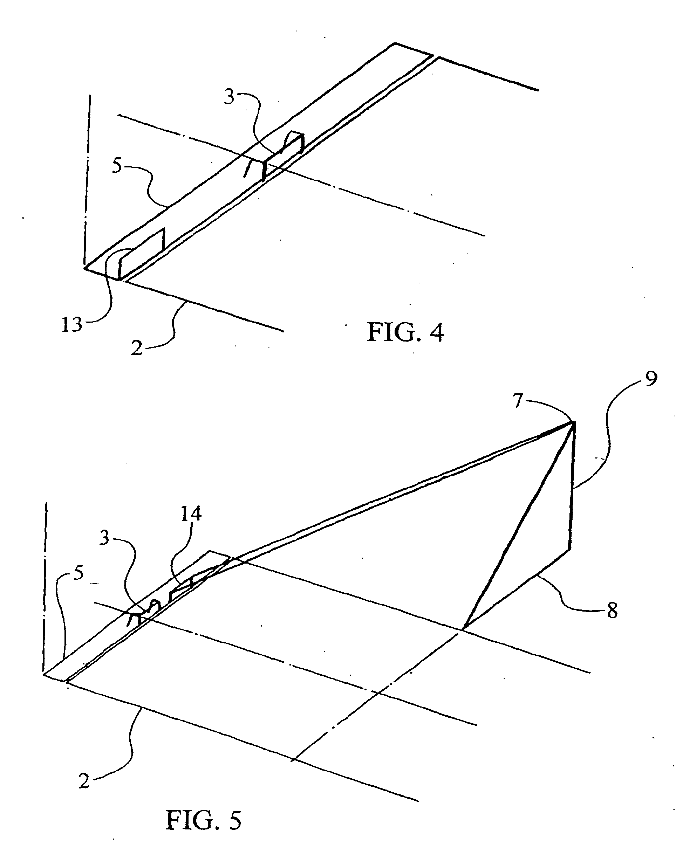

As shown in the drawings, according to the present method the playing field 2 will be depicted on a virtual surface 1 with the measurements of the playing field, positioning the goals indicated by the numbers 3 and 4 and the lines which delimit the field and the terraces 5 and 6. The camera will be located at the point 7 with a well determined mapping according to the three axes, as indicated diagrammatically by the numbers 8, 9 and 10. The virtual height of the panel will then be determined on the basis of the measurements available, with which the line L, indicated by the number 11, will be drawn from the outer limit of the panel which coincides with the line which delimits the field and the terraces 5, to the camera located at the point 7, seeking the intersection of this line with a plane Y-Z indicated by 12. By cutting the line 11 as it passes through the plane X-Y the virtual height 40 of the panel is obtained. The desired shape 13, Figure 4, will then be located, with the proportions of the original panel and the height calculated, on the inner limit 41.

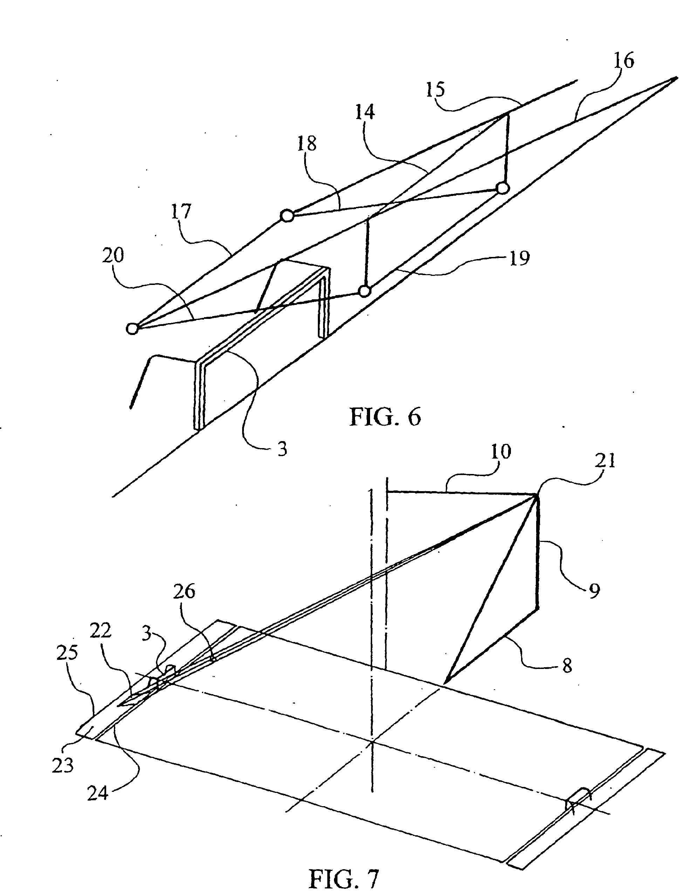

The panel will be positioned in the most convenient place and the deformation template will be obtained by drawing lines from the point at which the camera 7 is located, Figure 5, and the upper corners of the panel, which in this case has been represented by the rectangle 14. In Figure 6 can be seen in more detail said lines 15 and 16 which pass through the upper edges of the rectangular figure 14, said lines being extended as far as the playing field, the polygon of the virtual panel being obtained, composed of the lower corners of the panel and the ends of the projected lines, giving rise to the polygon the sides of which have been indicated by the numbers 17, 18, 19 and 20.

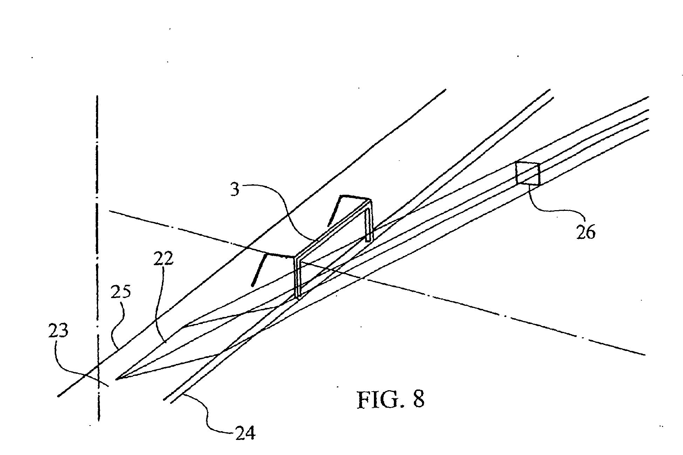

Once the shape and dimensions of the deformation template have been obtained, the original panel will be adapted to the template by converting the original desired shape of the deformation template, determining the different points by means of computer assistance. The result obtained is inscribed at the original size with the measurements obtained in the preceding phase, positioning it on the sports field at the exact co-ordinates stipulated when projection is carried out. For the production of the virtual panel, this can be done by means of a light gun arranged at a point 21 which coincides with the point at which the television camera will be positioned, directing it towards the site where it is desired to place the panel and sizing and focusing it so that it occupies the desired space. Figure 7 shows the point 21 where the light gun is positioned, and also the projection of the sign 22 on the strip of ground 23 located between the end 24 of the playing field and the boundary line 25 which constitutes the outer limit. In Figure 8 said production can be seen in greater detail, the arrangement of the projectable sign 26 having been shown diagrammatically.

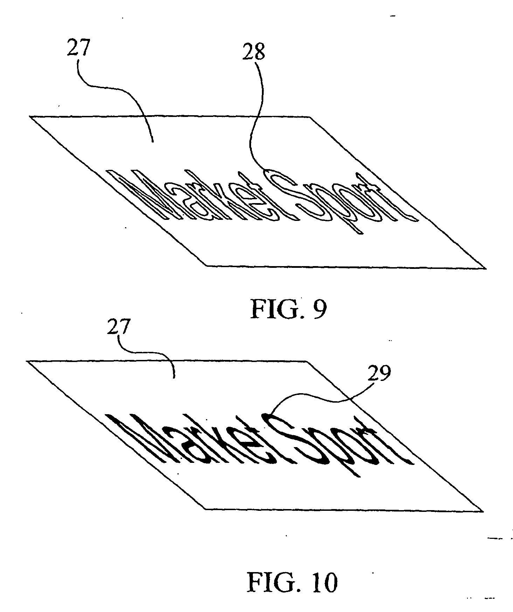

Once the desired positioning and scale have been obtained, the surface 22 of the sign is inscribed as shown diagrammatically in Figure 9, in which the sign 27 is represented by a pre-inscribed tracing 28. The pre-inscribed tracing will subsequently be transformed into a final inscription 29 starting from the pre-inscription.

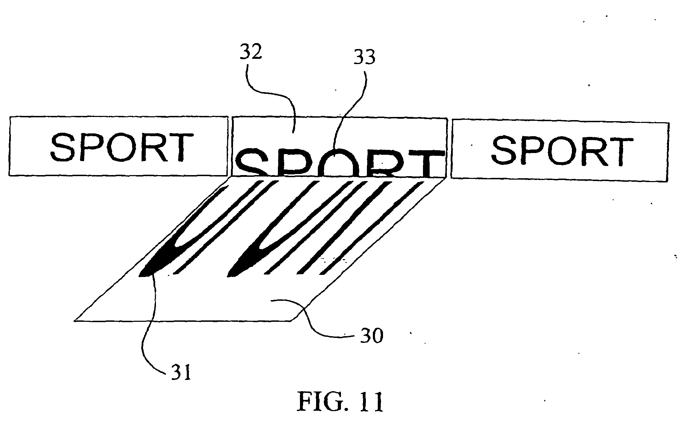

The method of the present invention makes it possible to effect the correct joining of one part of the sign, situated on the playing field, with another part situated on a vertical panel, as shown in Figure 11, in which can be seen the sign 30 which carries part of the advertising image 31 and which is arranged on the surface of the playing field, being joined to the vertical panel 32, on which the remainder of the graphic image 33 is arranged.

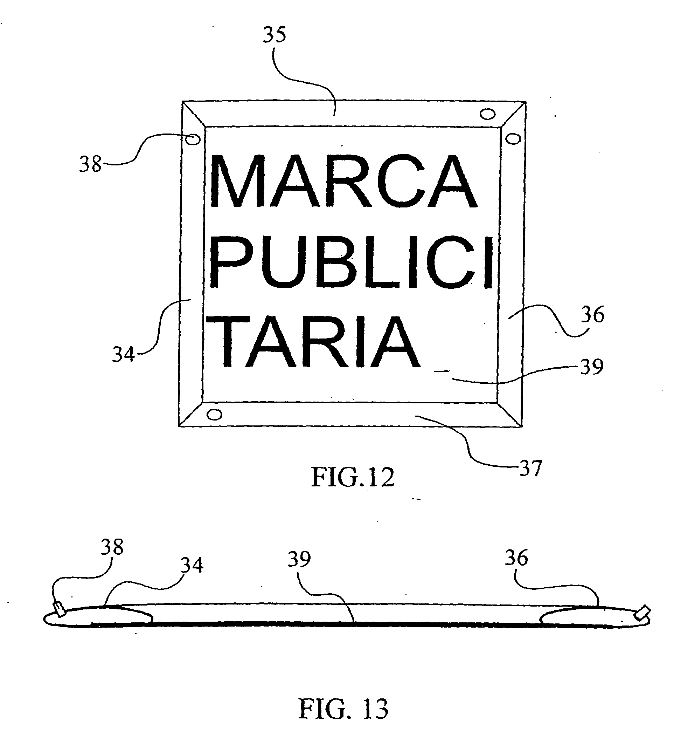

The present invention likewise comprises the concrete embodiment of the support for the advertising image or sign which will be placed on the playing field with special characteristics for rendering it stable without harmful effects being produced by the action of the wind. For this, as shown in Figures 12 and 13, provision is made for the formation of a frame consisting, for example, of four sides in the case of a rectangular inscription, which have been indicated by the numbers 34, 35, 36 and 37. Said sides preferably consist of tubes of impermeable, high strength PVC which have dimensions of approximately 15 by 3 cm. Each of said sides will be hermetically welded and will have a filling neck, as shown by 38 for the side 34, which will allow filling with water or some other liquid, by means of which a significant stability of the sign will be obtained, coupling it on the surface of the playing field and preventing the effects of wind. The body of the support or sign 39 will preferably be produced in a high strength 1100 decitex support grille with PVC coating on two faces and printed with welded paint.

## Claims

1. Method for the production of advertising panels (29, 39) to be placed on a terrace (5, 6) adjacent to a playing field (2) of sport grounds, comprising the following steps:
- determining the three-dimensional position (7) of a TV camera;
- performing an inverse perspective transformation of the image of the advertising panel to be seen virtually by the TV viewer as if it were standing vertically on the terrace (5, 6) into a deformed image to be placed actually horizontally on the terrace (5, 6);
**characterized by** the following steps
- positioning a light gun at the position (21, 7) of the TV camera;
- positioning a support (39) on which the deformed image is to be produced on the terrace (5, 6);
- directing, sizing and focusing the light of the light gun towards the support (39);
- projecting and tracing a pre-inscription (28) of the deformed image by said light gun onto the support (39); and
- transforming the pre-inscription (28) into the final deformed image (29) on the support (39).

2. Method, according to claim 1, **wherein** the support comprises a high-strength grille laminar body (39) supported by a frame consisting of tubes (34, 35, 36, 37) of flexible plastics material bearing individual means (38) for filling them with a liquid.

3. Method according to claim 2, **wherein** the laminar body (30) comprises a 1100 decitex grille.

4. Method according to claim 2 or 3, **wherein** the support (39) is coated with PVC on two faces and printed with heat fused paint.

5. Method according to one of claims 2 to 4, **wherein** the sides of the frame consist of individual tubes (34, 35, 36, 37) of PVC hermetically welded and provided with individual necks (38) for filling them with a liquid.

## Patentansprüche

1. Verfahren zur Herstellung von Werbetafeln (29, 39), welche auf einer zu einem Spielfeld (2) von Sportplätzen benachbarten Fläche (5, 6) anzuordnen sind, umfassend die folgenden Schritte:
• Ermitteln der dreidimensionalen Position (7) einer TV-Kamera;
• Durchführen einer inversen perspektivischen Transformation des Bildes der Werbetafel, um von dem TV-Zuschauer virtuell so gesehen zu werden, als ob sie vertikal auf der Fläche (5, 6) stehen würde, in ein deformiertes Bild, um tatsächlich horizontal auf der Fläche (5, 6) angeordnet zu werden;
**gekennzeichnet durch** die folgenden Schritte:
• Positionieren eines Lichtscheinwerfers an der Position (21, 7) der TV-Kamera;
• Positionieren einer Unterlage (39), auf der das deformierte Bild erzeugt wird, auf der Fläche (5, 6);
• Führen, Größeneinstellung und Fokussieren des Lichts des Lichtscheinwerfers in Richtung der Unterlage (39);
• Projizieren und Verfolgen einer Vorbeschriftung (28) des deformierten Bildes **durch** den Lichtscheinwerfer auf die Unterlage (39); und
• Transformieren der Vorbeschriftung (28) in das abschließende deformierte Bild (29) auf der Unterstützung (39).

2. Verfahren nach Anspruch 1, wobei die Unterlage einen hochfesten Gitterlaminarkörper (39) umfaßt, der von einem Rahmen, welcher aus Röhren (34, 35, 36, 37) aus einem flexiblen Kunststoffmaterial besteht, gestützt wird, welche individuelle Einrichtungen (38) umfassen, um sie mit einer Flüssigkeit zu füllen.

3. Verfahren nach Anspruch 2, wobei der Laminarkörper (30) ein 1100-Decitex-Gitter umfaßt.

4. Verfahren nach Anspruch 2 oder 3, wobei die Unterstützung (39) mit PVC auf zwei Flächen beschichtet und mit einer heißverschweißten Farbe bedruckt ist.

5. Verfahren nach einem der Ansprüche 2 bis 4, wobei die Seiten des Rahmens aus individuellen Röhren (34, 35, 36, 37) aus PVC bestehen, welche hermetisch geschweißt und mit individuellen Hälsen (38) ausgestattet sind, um sie mit einer Flüssigkeit zu füllen.

## Revendications

1. Procédé pour la production de panneaux publicitaires (29, 39) devant être placés sur une terrasse (5, 6) contiguë à un terrain de jeu (2) de stade, comprenant les étapes suivantes :
- détermination de la position (7) tridimensionnelle d'une caméra TV ;
- réalisation d'une transformation de perspective inverse de l'image du panneau publicitaire devant être vu virtuellement par les téléspectateurs comme s'il était positionné verticalement sur la terrasse (5, 6) en une image déformée à placer en réalité horizontalement sur la terrasse (5, 6) ;
**caractérisé par** les étapes suivantes
- positionnement d'un pistolet de lumière sur la position (21, 7) de la caméra TV ;
- positionnement d'un support (39) sur lequel l'image déformée doit être produite sur la terrasse (5, 6) ;
- orientation, dimensionnement et focalisation de la lumière du pistolet de lumière en direction du support (39) ;
- projection et traçage d'une préinscription (28) de l'image déformée par ledit pistolet de lumière sur le support (39) ; et
- transformation de la préinscription (28) en l'image déformée définitive (29) sur le support (39).

2. Procédé selon la revendication 1, dans lequel le support comprend un corps laminaire de grille à haute résistance (39) supporté par un châssis consistant en tubes (34, 35, 36, 37) de moyens individuels de portée en matériau plastique souple (38) pour les remplir d'un liquide.

3. Procédé selon la revendication 2, dans lequel le corps laminaire (30) comprend une grille de 1100 décitex.

4. Procédé selon la revendication 2 ou 3, dans lequel le support (39) est revêtu de PVC sur les deux faces et est imprimé d'une peinture thermo -soudée.

5. Procédé selon l'une des revendications 2 à 4, dans lequel les côtés du châssis consistent en des tubes individuels (34, 35, 36, 37) de PVC hermétiquement soudés et équipés de collets individuels (38) pour le remplissage d'un liquide.
